Europäisches Patentamt

European Patent Office

Office européen des brevets

(11) Publication number: **0 424 324 A1**

# EUROPEAN PATENT APPLICATION

(21) Application number: 90830406.6

(51) Int. Cl.5: **G01P 3/44**

(22) Date of filing: **18.09.90**

(30) Priority: **28.09.89 IT 6781689**

(43) Date of publication of application:
**24.04.91 Bulletin 91/17**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Magnino, Carlo**
**Via Torino 5**
**I-10098 Rivoli (Torini)(IT)**

(74) Representative: **Buzzi, Franco et al**
**c/o Jacobacci-Casetta & Perani S.p.A. Via**
**Alfieri, 17**
**I-10121 Torino(IT)**

(54) **An anti-lock braking system.**

(57) An anti-lock braking system for motor vehicles in which the pick-ups (24) of the wheel rotation-rate sensors are mounted on the support housing (28) of the gearbox/differential unit (19) and face radially towards the phonic wheels (22) mounted or formed on the differential sides of the constant-velocity universal joints (20).

EP 0 424 324 A1

## AN ANTI-LOCK BRAKING SYSTEM

The present invention relates to an anti-lock braking system for a motor vehicle provided with at least one differential unit supported by the structure of the vehicle and including two drive shafts for rotating swinging shafts associated with the driving wheels with the interposition of constant-velocity universal joints, the system including sensors for sensing the rates of rotation of the wheels, each having a phonic wheel which is rotatable with the wheel of the motor vehicle and a pick-up associated with the phonic wheel and connected to the electronic control circuit of the system.

Anti-lock braking systems currently provide for the positioning of the phonic wheels and the wheel-rotation-rate sensors near the constant-velocity universal joints, on the wheel side. In particular, the pick-up is fitted on the swinging mounting of the wheel, either directly or by means of a bracket, and its phonic wheel is associated with the part of the constant-velocity universal joint which is keyed to the hub of the wheel. This solution has the disadvantage that the pick-up must be mounted on a mechanical member which moves relative to the body of the motor vehicle, as a result of both the resilient travel of the suspension unit and any steering of the wheels. The electric wire connecting the pick-up to the electronic control circuit must therefore have considerable mechanical strength and its layout must be planned carefully so as to avoid any contact with the movable parts of the suspension system or the wheel in order to prevent the rapid abrasion of the insulation of the wire.

The object of the present invention is to provide a system of the type specified at the beginning of the description which enables the aforesaid disadvantages to be overcome simply and cheaply.

According to the invention, this object is achieved by virtue of the fact that the pick-ups are supported by the differential unit and in that the phonic wheels are associated with rotating parts of the constant-velocity universal joints keyed to the drive shafts.

By differential unit is meant not only those fitted to rear-wheel-drive vehicles, but also the gearbox/differential units commonly used in front wheel-drive vehicles.

By virtue of the above characteristics, the paths of the wires connecting the pick-ups associated with the driving wheels to the control circuit is considerably simplified, since the wires are no longer subject to appreciable movement. As well as simplifying the fitting of the anti-lock braking system, commonly known as ABS or an antiskid system, the solution according to the invention provides a more reliable system than is currently obtainable.

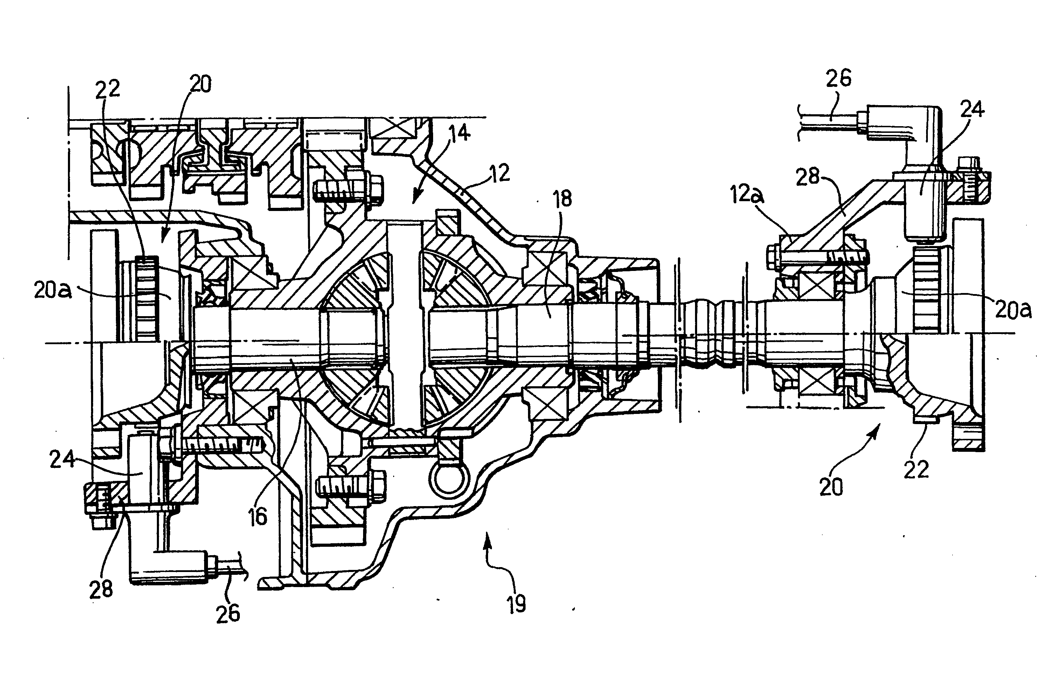

Further characteristics and advantages of the present invention will become clear from the detailed description which follows with reference to the appended drawing provided by way of non-limiting example and showing a detail of an anti-lock braking system according to the invention.

With reference to the drawing, a gearbox-differential unit of a front-wheel-drive motor vehicle is generally indicated 10. The unit 10 includes a housing 12 which forms part of the power unit (and is supported on the motor vehicle body thereby) and within which is mounted a differential 14 for enabling respective drive shafts 16 and 18 to rotate at different rates, the drive shafts being connected by means of constant-velocity universal joints 20 to swinging axle-shafts (not shown) for transmitting the drive to the driving wheels. Each constant-velocity universal joint 20 is of known type and has a bell-shaped element 20a keyed to the respective drive shaft 16 or 18, and having a phonic wheel 22 formed on its side wall. In known manner, each of the phonic wheels 22 is associated with a pick-up 24 connected to the electronic control circuit of the system by an electric wire 26. Each pick-up 24 is mounted on a support bracket 28 fixed to or integral with the housing 12 of the gearbox/differential unit 10 or the transmission mounting 12a.

It is therefore clear that the pick-ups 24 are not affected by the oscillation of the wheels allowed by the suspension unit or by the movements caused by the steering, since they are fixed to the gearbox/differential unit, that is to the engine of the motor vehicle in the case of the front-wheel-drive vehicle.

Clearly, the system according to the invention also lends itself to advantageous use in rear-wheel-drive vehicles with differential units separate from their gearbox units or in four-wheel-drive vehicles.

## Claims

1. An anti-lock braking system for a motor vehicle provided with at least one differential unit supported by the structure of the vehicle and including two drive shafts for rotating oscillating shafts associated with the driving wheels with the interposition of constant-velocity universal joints, the system including sensors for sensing the rates of rotation of the wheels, each having a phonic wheel which is rotatable with the wheel of the motor vehicle and a pick-up associated with the phonic wheel and connected to the electronic control circuit of the system, characterised in that the pick-ups (24) are supported by the differential unit (10) and in that the phonic wheels (22) are associated with rotating parts (20a) of the constant-velocity universal joints (20) keyed to the drive shafts (16, 18).

2. A braking system acording to Claim 1, in which the rotating parts (20a) of the constant-velocity universal joints keyed to the drive shafts (16, 18) are cup-shaped, characterised in that the phonic wheels (22) are formed directly in the lateral surfaces of the parts (20a).

3. A system according to Claim 1, particularly for front-wheel-drive vehicles with a gearbox/differential unit housed in a support housing, characterised in that the pick-ups (24) are mounted on the housing (12).

4. A system according to Claim 3, characterised in that at least one pick-up (24) is mounted on a bracket (28) fixed to the support housing (12) of the gearbox/differential unit (10).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 204 647 (RIV-SKF OFFICINE DI VILLAR PEROSA)<br>* Page 1, line 19 - page 2, line 23; page 7, line 24 - page 11, line 10; figures 1,2,6 *<br>--- | 1,5 | G 01 P 3/44 |
| A | GB-A-2 043 256 (BOSCH)<br>* Whole document *<br>--- | 1,5 | |
| A | DE-A-3 703 395 (PORSCHE)<br>* Whole document *<br>----- | 1,5 | |

TECHNICAL FIELDS SEARCHED (Int. Cl.5)

G 01 P

The present search report has been drawn up for all claims

| Place of search | Date of completion of the search | Examiner |
|---|---|---|
| THE HAGUE | 07-01-1991 | ROBINSON M.A. |